# EUROPÄISCHE PATENTANMELDUNG

(11) **EP 2 399 830 A2**
(43) Veröffentlichungstag der Anmeldung: **28.12.2011**
(21) Anmeldenummer: 11005026.7
(22) Anmeldetag: 21.06.2011
(51) Int. Cl.: B64G 1/10

(54) **Vorrichtung, Satellit und Verfahren zum Einfangen von Hochgeschwindigkeitsteilchen**

(30) Priorität: 22.06.2010 DE 102010024644
(71) Anmelder: Astrium GmbH, 82024 Taufkirchen (DE)
(72) Erfinder: Knirsch, Ulrich, 88677 Markdorf (DE)
(74) Vertreter: Avenhaus, Beate

(57) **Zusammenfassung**

Eine Vorrichtung zum Einfangen von Hochgeschwindigkeitsteilchen, insbesondere von Weltraumschrott, weist eine erste, vordere Fängerfläche (3) und zumindest eine weitere, hintere Fängerfläche (4) auf, wobei die Fängerflächen (3, 4) im Wesentlichen parallel zueinander angeordnet und in Normalenrichtung von einander beabstandet sind. Vorzugsweise ist diese Vorrichtung als Satellit ausgebildet.

## Beschreibung

### TECHNISCHES GEBIET

Die vorliegende Erfindung betrifft eine Vorrichtung zum Einfangen von Hochgeschwindigkeitsteilchen, insbesondere von Weltraumschrott. Sie betrifft weiterhin einen mit einer derartigen Vorrichtung versehenen Satelliten sowie ein Verfahren zum Einfangen von Hochgeschwindigkeitsteilchen, insbesondere von Weltraumschrott.

Durch anhaltende und zunehmende Nutzung des Weltraums entstandener Schrott gefährdet Satelliten und bemannte Weltraummissionen. Dabei geht die größte Gefahr von so genannten kritischen Fragmenten aus, deren Größe zwischen einem Millimeter und mehreren Zentimetern Durchmesser beträgt. Diese kritischen Fragmente haben das Potential, einen Satelliten, oder sogar die Panzerung einer Raumstation zu durchschlagen, sind jedoch zu klein, um von der Erde aus detektiert zu werden, sodass das Fliegen von Ausweichmanövern unmöglich ist. Kritische Fragmente sind zahlenmäßig weit häufiger als größere Fragmente.

### STAND DER TECHNIK

Lappas (http://www.economist.com/science-technology/displaystory.cfm?story_id= 15814409) schlägt vor, ein Sonnensegel eines defekten Satelliten so auszurichten, dass der Satellit aufgrund der auf das Sonnensegel auftreffenden Strahlung in Richtung der Erdatmosphäre gelenkt wird, um den Wiedereintritt des Satelliten in die Erdatmosphäre und damit dessen restlose Zerstörung zu beschleunigen. Bei diesem Vorgang, der sich jedoch über einige Jahre hinziehen dürfte, soll das Sonnensegel auch dafür verwendet werden, mikroskopische Fragmente, die sich auf dem jeweiligen Orbit bewegen, einzufangen. Nachteilig ist dabei jedoch, dass die aus dünnstem Material bestehenden Sonnensegel beim Aufprall eines kritischen Fragments selbst derart zerstört werden, dass sie Sekundärpartikel freisetzen, die sich dann auf dem Orbit als eigenständige kritische Fragmente bewegen. Hinzu kommt, dass bei diesem Vorschlag die Sonnensegel erst nach Missionsende zum Auffangen von Weltraumschrott verwendet werden, so dass dieser Vorschlag keine sofortige Beseitigung von Weltraumschrott ermöglicht.

### DARSTELLUNG DER ERFINDUNG

Es ist daher die Aufgabe der vorliegenden Erfindung, eine Vorrichtung anzugeben, die es ermöglicht, Hochgeschwindigkeitsteilchen, insbesondere kritische Fragmente von Weltraummüll, effizient einzusammeln oder zu zerstören. Eine weitere Aufgabe ist es, einen Satelliten anzugeben, der mit einer derartigen Vorrichtung ausgestattet ist. Eine dritte Aufgabe ist es, ein Verfahren anzugeben, mittels dem ein derartiger Satellit die Hochgeschwindigkeitsteilchen einfangen kann.

Die die Vorrichtung betreffende Aufgabe wird gelöst durch die Merkmale des Patentanspruchs 1.

Diese erfindungsgemäße Vorrichtung zum Einfangen von

Hochgeschwindigkeitsteilchen, insbesondere von Weltraumschrott, ist versehen mit einer ersten, vorderen Fängerfläche und zumindest einer weiteren, hinteren Fängerfläche, wobei die Fängerflächen im wesentlichen parallel zueinander angeordnet und in Normalenrichtung voneinander beabstandet sind.

### VORTEILE

Dieser doppelschichtige Aufbau der erfindungsgemäßen Vorrichtung mit den beiden in einem Abstand voneinander parallel angeordneten Fängerflächen bewirkt, dass Teilchen, die auf die erste, vordere Fängerfläche aufprallen, diese zwar am Aufprallort durchschlagen, aber dabei in einer Vielzahl von Partikeln zerplatzen. Sie bilden dadurch einen Kegel aus Fragmenten, die in Richtung auf die hintere Fängerfläche weiterfliegen. Durch den zwischen den beiden Fängerflächen vorgesehenen Abstand verteilen sich diese Fragmente beim Auftreffen auf die hintere Fängerfläche auf eine große Fläche, sodass die hintere Fängerfläche diese vom Hochgeschwindigkeitsteilchen noch verbliebenen Trümmerfragmente aufzufangen vermag.

Es kann zwar vorkommen, dass so genannte superkritische oder auch besonders langsame Teilchen beim Auftreffen auf die erste Fängerfläche nicht ausreichend abgebremst und/oder fragmentiert werden, sodass diese Teilchen auch noch die hintere Fängerfläche durchdringen, jedoch werden sie hierbei so stark abgebremst und mit hoher Wahrscheinlichkeit beim Auftreffen auf die hintere Fängerfläche noch weiter fragmentiert, sodass der Wiedereintritt dieser dann noch verbleibenden langsamer gewordenen Fragmente in die Erdatmosphäre beschleunigt wird und somit ihr Gefahrenpotential als Weltraumschrott ebenfalls wirksam reduziert wird.

Vorzugsweise weist die vordere Fängerfläche ein Material auf, das eine höhere innere Schallgeschwindigkeit als das Material der hinteren Fängerfläche besitzt. Diese Ausgestaltung der auch als "Bumper" bezeichneten vorderen Fängerfläche sorgt bei minimaler eigener Masse für eine optimale Fragmentierung auftreffender Hochgeschwindigkeitsteilchen.

Vorteilhaft ist dabei, wenn das Material der vorderen Fängerfläche keramisch verstärkte Fasern aufweist. Derartige keramisch verstärkte Fasern sorgen besonders wirksam für eine Fragmentierung auftreffender Hochgeschwindigkeitsteilchen. Die Dicke der vorderen Fängerfläche spielt für die Wirksamkeit nur eine untergeordnete Rolle; die vordere Fängerfläche sollte jedoch so dick sein, dass sie bei einer Kollision mit einem Hochgeschwindigkeitsteilchen nicht lediglich von diesem durchschlagen wird, sondern auch dafür sorgt, dass das Hochgeschwindigkeitsteilchen durch den Aufprall fragmentiert wird.

Vorzugsweise weist die hintere Fängerfläche ein Material auf, dessen Elastizität größer ist, als die des Materials der vorderen Fängerfläche. Diese auch als "Catcher" bezeichnete hintere Fängerfläche muss in der Lage sein, die beim Auftreffen des Hochgeschwindigkeitsteilchens auf die vordere Fängerfläche erzeugten Fragmente aufzufangen, wozu die hintere Fängerfläche vorzugsweise aus zäherem Material als die vordere Fängerfläche besteht.

Dabei enthält das Material der hinteren Fängerfläche vorzugsweise Aramid-Fasem, wie sie beispielsweise unter der Marke Kevlar^{®} bekannt sind.

Weiterhin ist es von Vorteil, wenn die Dicke der hinteren Fängerfläche größer ist, als die Dicke der vorderen Fängerfläche. Während die vordere Fängerfläche als Fragmentierungsschicht dient, soll die hintere Fängerfläche als Auffangschicht dienen, was dadurch erleichtert wird, dass die hintere Fängerfläche dicker und elastischer ist, als die vordere Fängerfläche.

Es ist auch möglich, weitere Fängerflächen als Fragmentierungsschicht und/oder als Auffangschicht vorzusehen, wodurch die Wirkung der Vorrichtung weiter verbessert wird. Optimierungsanalysen haben jedoch ergeben, dass das Vorsehen weiterer interner Fängerflächen, zwischen der vorderen Fängerfläche und der hinteren Fängerfläche nicht masseoptimal ist, da die Wirkung eines großen Abstandes zwischen der vorderen und der hinteren Fängerfläche, der ein Verteilen der Fragmente auf eine größere Fläche bewirkt, überwiegt. Es ist daher sinnvoller, die Masse, die weitere Fängerflächen enthalten würden, in die Dicke und Elastizität der hinteren Fängerfläche zu investieren. Dadurch wird bei gleicher Masse ein wesentlich höherer Wirkungsgrad beim Einfangen von Hochgeschwindigkeitsteilchen erzielt.

Besonders von Vorteil ist es, wenn die Fängerflächen von unstarren Körpern gebildet sind, die jeweils an zwei voneinander abgewandten Stirnseiten an jeweils einer Stützstruktur gehaltert sind. Dieser Aufbau erleichtert den Transport der Vorrichtung in den Weltraum.

Dabei ist es von Vorteil, wenn die Stützstruktur jeweils von einem Wickelkernkörper gebildet ist, wobei zumindest einer der Wickelkernkörper um eine parallel zu den Aufspannebenen der Fängerflächen verlaufende Achse drehbar ist, um die Fängerflächen auf diesen Wickelkernkörper auf- oder von diesem abzuwickeln. Hierdurch wird es möglich, die gesamte Vorrichtung im aufgewickelten Zustand in den Weltraum zu transportieren, wobei die Fängerflächen volumenoptimal verstaut sind, um sie dann im Weltraum abzuwickeln und aufzuspannen.

Besonders von Vorteil ist eine Weiterbildung dieser Ausgestaltungsform, bei welcher beide Wickelkernkörper um jeweils eine parallel zu den Aufspannebenen der Fängerflächen verlaufende Achse drehbar sind, um die Fängerflächen auf beide Wickelkernkörper auf- oder von diesen abzuwickeln, wobei die Achsen der beiden Wickelkernkörper vorzugsweise parallel zueinander verlaufen. Bei dieser Ausgestaltungsform können die Fängerflächen vor dem Start zum raumsparenden Transport in den Weltraum wie bei einer alten Schriftrolle auf die beiden Wickelkernkörper aufgewickelt und im Weltraum wieder abgewickelt und aufgespannt werden.

Die den Satelliten betreffende Aufgabe wird gemäß Patentanspruch 10 gelöst durch einen Satelliten, der mit zumindest einer erfindungsgemäßen Vorrichtung zum Einfangen von Hochgeschwindigkeitsteilchen versehen ist. Die erfindungsgemäße Vorrichtung kann dabei entweder an einem Satelliten vorgesehen sein oder die Vorrichtung selbst kann als Satellit ausgebildet sein.

Dazu ist es von Vorteil, wenn die Navigationseinrichtung, die Kommunikationseinrichtung und der Steuerungscomputer des Satelliten in der Stützstruktur vorgesehen sind und wenn die Stützstruktur mit Steuerungseinrichtungen zur Lageregelung des Satelliten versehen ist. Bei dieser Ausführungsform sind die wesentlichen Energieversorgungs- und Steuerungseinrichtungen in der Stützstruktur, beispielsweise in einem oder in beiden der Wickelkemkörper, vorgesehen, sodass die gesamte Vorrichtung einen Satelliten bildet.

Vorzugsweise ist die Stützstruktur mit Solarzellen zur Energieversorgung versehen, die im abgewickelten Zustand der Fängerflächen der Sonnenstrahlung ausgesetzt sind. Dies ermöglicht es, nur einen kleinen Energiespeicher beim Start mitzuführen, der ausreichend ist, um den Abwickel- und Aufspannvorgang der Vorrichtung zu gewährleisten. Sobald die Fängerflächen von den Wickelkernkörpern abgewickelt sind, sind die Solarzellen, die vorzugsweise unabhängig von der Lage des Satelliten ausgerichtet werden können, der Sonnenstrahlung ausgesetzt und können die für den Betrieb des Satelliten erforderliche elektrische Energie liefern.

Besonders vorteilhaft ist es, wenn der erfindungsgemäße Satellit mit zumindest einer von einem Wickelkernkörper gebildeten Stützstruktur versehen ist und wenn dieser Wickelkernkörper mit zumindest einer Antriebsvorrichtung versehen ist, die ausgestaltet ist, um den Wickelkernkörper um seine Längsachse drehen zu können. Diese Antriebseinrichtung kann dazu dienen, den Abrollvorgang der Fängerflächen vom Wickelkernkörper durchzuführen.

Dabei ist es von Vorteil, wenn die Antriebsvorrichtung von zumindest einem Magnetorquer und/oder von zumindest einer Rückstoßdüse gebildet ist.

Insbesondere, wenn zwei Magnetorquer in jeweils einem der beiden Wickelkernkörper vorgesehen sind, die einander abstoßen, kann auf einfache Weise der Abwickelvorgang der auf beide Wickelkernkörper aufgewickelten Fängerflächen bewerkstelligt werden.

Der das Verfahren betreffende Teil der Aufgabe wird gelöst durch ein Verfahren gemäß Patentanspruch 15.

Dieses erfindungsgemäße Verfahren zum Einfangen von Hochgeschwindigkeitsteilchen, insbesondere von Weltraumschrott mit einem erfindungsgemäß ausgestalteten Satelliten zeichnet sich dadurch aus, dass sich der Satellit entlang einer Flugbahn auf einem vorzugsweise mit den einzufangenden Hochgeschwindigkeitsteilchen gemeinsamen Orbit, vorzugsweise in einer der Bewegungsrichtung der Hochgeschwindigkeitsteilchen entgegengesetzten Richtung bewegt, wobei der Satellit so ausgerichtet ist, dass die Flugbahn in einer zur vorderen Fängerfläche normalen Richtung verläuft. Auf diese Weise kann mit möglichst geringer Masse eine maximale Einfangwirkung von Hochgeschwindigkeitsteilchen erzielt werden, da die Schichten zwischen den beiden Stützstrukturen der Vorrichtung aufgespannt und senkrecht zur

Einflugrichtung vermuteter Hochgeschwindigkeitsteilchen ausgerichtet sind. Die Flugrichtung des Satelliten sollte daher parallel, aber entgegengesetzt zur Flugrichtung der vermuteten Weltraumschrott-Teilchen ausgerichtet sein.

Dies wird durch eine Gravitationsstabilisierung des Satelliten erreicht. Die Gesamtmasse des Satelliten ist die zum großen Teil durch die beiden von den Stützstrukturen beziehungsweise Wickelkernkörpern gebildeten Endkörpern bestimmt. Diese beiden Endkörper sind durch die Fängerflächen, die beispielsweise aus einer Gewebeschicht bestehen, miteinander verbunden und werden so auf dieselbe Winkelgeschwindigkeit gezwungen. Für die Masse des bezüglich der Umlaufbahn radial äußeren Endkörpers ist diese Winkelgeschwindigkeit demnach etwas zu hoch, sodass die Fliehkraft die Schwerkraft überwiegt. Die Masse dieses Endkörpers wird daher nach außen gezogen. Bei der Masse des radial inneren Endkörpers ist es umgekehrt; sie wird folglich nach unten, also auf die Erde zu, gezogen. Beide Endkörper spannen daher ohne weiteren Einfluss die Fängerflächen auf und richten sie optimal aus. Hierbei sollte beachtet werden, dass die Länge L der Fängerflächen, also deren Erstreckung zwischen den beiden Endkörpern, wesentlich größer ist, als die Breite B der Fängerflächen. Diese Breite B ist überdies durch die Größe der Nutzlastabdeckung der Startrakete begrenzt. In der Praxis haben sich Werte von W = 4 m und L = 40 m bewährt.

Bezugszeichen in den Ansprüchen, der Beschreibung und den Zeichnungen dienen lediglich dem besseren Verständnis der Erfindung und sollen den Schutzumfang nicht einschränken.

### KURZE BESCHREIBUNG DER ZEICHNUNGEN

Es zeigt:
- Fig. 1: eine schematische perspektivische Ansicht einer erfindungsgemäßen Vorrichtung;
- Fig. 2A und Fig. 2B: die Wirkungsweise der beiden Fängerflächen beim Auftreffen eines Hochgeschwindigkeitsteilchens.

### DARSTELLUNG VON BEVORZUGTEN AUSFÜHRUNGSBEISPIELEN

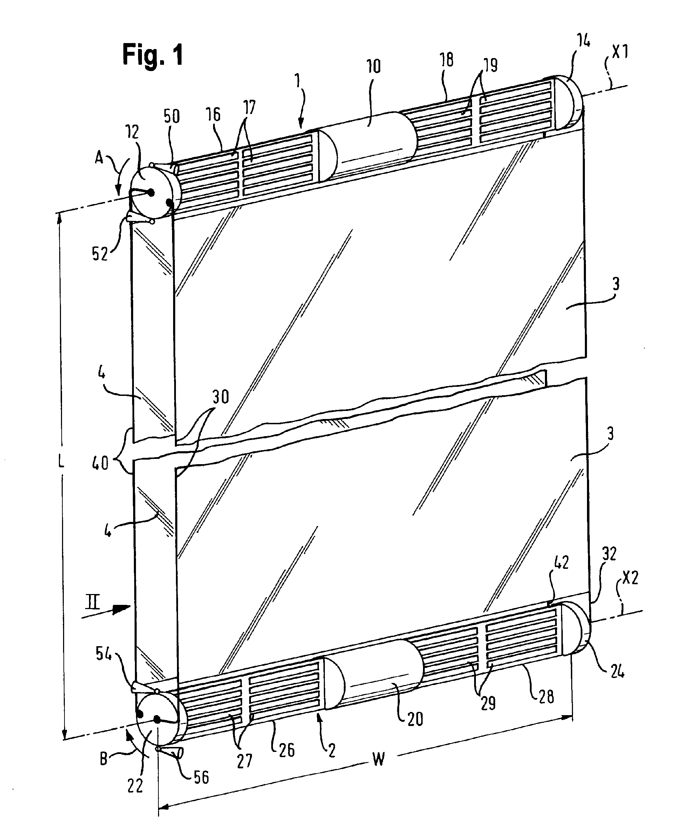

In Fig. 1 ist schematisch eine Vorrichtung zum Einfangen von Hochgeschwindigkeitsteilchen gemäß der vorliegenden Erfindung dargestellt. Diese Vorrichtung weist einen ersten Wickelkernkörper 1, einen zweiten Wickelkernkörper 2, eine vordere Fängerfläche 3 und eine hintere Fängerfläche 4 auf. Die beiden Fängerflächen 3, 4 sind von unstarren Körpern gebildet und bestehen beispielsweise aus einer Gewebebahn oder Folienbahn. Die Wickelkernkörper 1, 2 werden über noch näher bestimme Mechanismen in entgegengesetzte Richtungen gezwungen, so dass die Fängerflächen 3, 4 zwischen den beiden Wickelkernkörpern 1, 2 gespannt sind. Die Wickelkernkörper 1, 2 bilden auf diese Weise jeweils eine Stützstruktur für die Vorrichtung.

Jede der beiden Fängerflächen 3, 4 ist an ihren Seiten mit einem Spannseil 30, 32, 40, 42 versehen welches jeweils mit einem Ende am ersten Wickelkernkörper und mit dem anderen Ende am Wickelkernkörper 2 befestigt ist. Die jeweilige Fängerfläche 3, 4 erstreckt sich somit in Querrichtung zwischen den zugehörigen Spannseilen 30, 32 beziehungsweise 40, 42. Die Enden der jeweiligen Spannseile 30, 32, 40, 42 stehen dabei über den oberen beziehungsweise unteren Rand der Fängerfläche 3, 4 hinaus, so dass die Fängerfläche 3, 4 in dem in Fig. 1 dargestellten expandierten Zustand der Vorrichtung die Wickelkernkörper 1, 2 nicht bedeckt.

Der jeweilige Wickelkernkörper 1, 2 weist ein zylindrisches Zentralelement 10, 20 auf, welches als geschlossener Gehäusekörper ausgebildet ist. An den beiden seitlichen Enden ist jeder Wickelkernkörper 1, 2 mit einer Endscheibe 12, 14, 22, 24 versehen. Zwischen dem Zentralkörper 10, 20 und den Endscheiben 12, 14 beziehungsweise 22, 24 erstreckt sich jeweils eine Trägerplatte 16, 18 beziehungsweise 26, 28, die auf einer oder auf beiden der sich zwischen dem Zentralkörper 10, 20 und der zugehörigen Endplatte 12, 14, 22, 24 erstreckenden Oberflächen mit Solarzellen 17, 19, 27, 29 versehen sind.

Die scheibenartigen Endkörper 12, 14, 22, 24 sind als Wickelspulen ausgebildet, auf die die Spannseile 30, 32, 40, 42 der Fängerflächen 3, 4 aufwickelbar sind. Das mittlere zylindrische Zentralelement 10, 20 weist im Wesentlichen denselben Außendurchmesser auf wie die zugehörigen Endscheiben 12, 14, 22, 24, so dass die Endscheiben und das Zentralelement des jeweiligen Wickelkernkörpers 1, 2 zur Führung und zum Abstützen der Gewebe- beziehungsweise Folienbahn der jeweiligen Fängerfläche 3, 4 dienen, wenn diese auf den entsprechenden Wickelkernkörper 1, 2 aufgewickelt wird.

In dem in Fig. 1 gezeigten Beispiel ist die Vorrichtung selbst als Satellit ausgestaltet, wobei die Zentralelemente 10, 20 Subsysteme, also Betriebskomponenten, des Satelliten, beispielsweise eine Navigationseinrichtung, eine Kommunikationseinrichtung, einen Steuerungscomputer und einen Energiespeicher, aufnehmen. Zudem ist in jedem der beiden Zentralelemente 10, 20 ein Magnetorquer vorgesehen, der parallel zur Rotationsachse X1, X2 des jeweiligen Wickelkernkörper 1, 2 angeordnet ist. Jeder dieser Magnetorquer erzeugt ein magnetisches Feld, wobei das magnetische Feld des ersten Magnetorquers und das magnetische Feld des zweiten Magnetorquers entgegengesetzt gerichtet sind, so dass die gegenseitige Beeinflussung der beiden magnetischen Felder dazu führt, dass sich die Magnetorquer und damit auch die beiden Wickelkernkörper 1, 2 entgegengesetzt zueinander um die jeweilige Achse X1, X2 drehen, wie durch die beiden Pfeile A, B symbolhaft gezeigt ist. Die durch die Pfeile A, B gezeigte Drehrichtung sorgt dafür, dass die beiden Fängerflächen 3, 4 auf die Wickelkernkörper 1, 2 aufgewickelt werden. Die Magnetorquer lassen sich aber auch so betreiben, dass sich die Wickelkernkörper 1, 2 entgegengesetzt der Pfeilrichtung A, B drehen, um dadurch die Fängerfläche 3, 4 von den Wickelkernkörpern 1, 2 abzuwickeln.

Des Weiteren sind zumindest an den Endscheiben 12, 22 an einer Seite der Vorrichtung an diametral von einander abgewandten Orten im Bereich des Randes der jeweiligen Endscheibe 12, 22 als Rückstoßdüsen ausgebildete Steuerdüsen 50, 52, 54, 56 angeordnet, mit denen eine Lagerregelung des Satelliten durchgeführt werden kann. Die Steuerdüsen 50, 52 beziehungsweise 54, 56 einer Endscheibe 12, 22 sind jeweils tangential zum Umfang in entgegengesetzte Richtungen gerichtet. Außerdem sind die Steuerdüsen 50, 52, 54, 56 so angeordnet, dass sie die Ihnen zugeordneten Wickelkernkörper 1, 2 in entgegengesetzte Richtungen, also in Richtung der Pfeile A, B zur Drehung antreiben können, um die Fängerflächen 3, 4 auf die Wickelkernkörper 1, 2 aufwickeln zu können. Obwohl in der Darstellung der Fig. 1 die Steuerdüsen nur an einem Ende des jeweiligen Wickelkernkörper 1, 2 vorgesehen sind, können selbstverständlich auch am anderen Ende entsprechende Steuerdüsen in gleicher Weise vorgesehen sein.

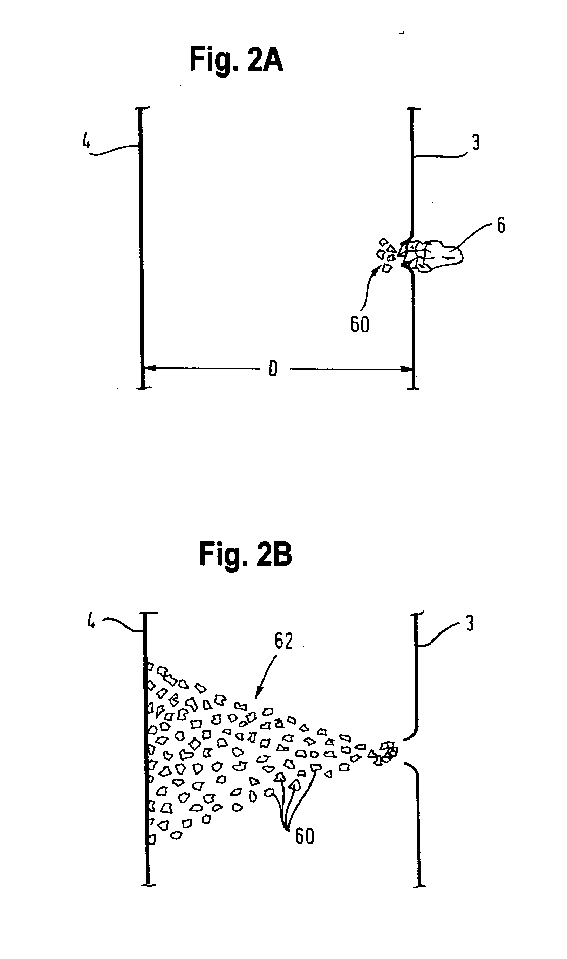

Fig. 2A zeigt eine Seitenansicht eines Ausschnitts der erfindungsgemäßen Vorrichtung aus Fig. 1 in Richtung des Pfeils II im Moment des Auftreffens eines Hochgeschwindigkeitsteilchens 6 auf die vordere Fängerfläche 3. Es ist dabei zu erkennen, dass das Teilchen 6 die Fängerfläche 3 lokal durchschlägt und bei dieser Kollision mit der Fängerfläche 3 zerbricht. Durch diesen Aufprall wird zwar die kinetische Energie des Teilchens 6 herabgesetzt, doch besitzen die beim Aufprall entstehenden Fragmente 60 des Teilchens 6 noch ausreichend kinetische Energie, um in Richtung auf die hintere Fängerfläche 4 weiter zu fliegen.

Durch den Aufprall und das damit verbundene Zerplatzen des Teilchens 6 in die Fragmente 60 entsteht hinter der vorderen Fängerfläche 3 ein Fragmentkegel 62, wie in Fig. 2B zu erkennen ist. Die gegenüber der ursprünglichen Geschwindigkeit des Teilchens 6 abgebremsten Fragmente, deren jeweilige Masse deutlich geringer ist als die Masse des ursprünglichen Teilchens 6, besitzen somit jeweils eine wesentlich geringere kinetische Energie, als das Teilchen 6 vor dem Aufprall auf die vordere Fängerfläche 3 besaß. Zudem vergrößert sich durch das Entstehen des Fragmentkegels die Aufprallfläche der Fragmente auf der zweiten Fängerfläche 4 im Vergleich zur Aufprallfläche des Teilchens 6 auf der ersten Fängerfläche 3. Das jeweilige Fragment 60 übt somit auf die zweite Fängerfläche 4 eine deutlich geringere Stoßwirkung aus, als die, die das Teilchen 6 auf die erste Fängerfläche 3 ausgeübt hat. Da zudem die zweite Fängerfläche 4 aus einem Material besteht, dessen Elastizität größer ist, als die des Materials der vorderen Fängerfläche 3 und da die hintere Fängerfläche 4 dicker ist, als die vordere Fängerfläche 3, werden die Fragmente 60 von der hinteren Fängerfläche 4 aufgefangen, ohne diese zu durchschlagen.

Damit eine wirksame Ausbreitung des Fragmentkegels 62 der Fragmente 60 bis zu deren Auftreffen auf die hinteren Fängerfläche 4 gewährleistet ist, hat es sich als sinnvoll erwiesen, den Abstand D zwischen den beiden Fängerfläche 3, 4 auf etwa 50 cm zu bemessen. Folglich beträgt auch der Durchmesser der Endscheiben 12, 14, 22, 24 etwa 50 cm. Diese Maß stellt einen vertretbaren Kompromiss zwischen dem in einer Trägerrakete unterzubringenden Nutzlastvolumen und der erwünschten Maximierung des Abstands zwischen den beiden Fängerflächen 3, 4 dar.

Die Schutzwirkung der erfindungsgemäßen Vorrichtung (definiert als maximale Größe von aufgefangenen Teilchen) wird maßgeblich durch das Quadrat des Abstandes D zwischen den beiden Fängerflächen 3, 4 bestimmt. Ein Auslegungsbeispiel für eine als Satellit ausgebildete erfindungsgemäße Vorrichtung besitzt eine Breite von W = 4 m und eine Länge von L = 40 m zwischen den beiden Achsen der Wickelkernkörper 1, 2 sowie einem Abstand zwischen den beiden Fängerflächen von D = 0,5 m.

Aufgrund des hohen Verhältnisses von Oberfläche zu Masse wird eine als Satellit ausgebildete erfindungsgemäße Vorrichtung auf einem erdnahen Orbit, auf welchem die Weltraumschrott-Teilchen einzusammeln sind, verhältnismäßig stark durch die dort noch vorhandene Restatmosphäre der Erde abgebremst. Dieser Abbremsvorgang stellt sicher, dass sich die als Satellit ausgebildete Vorrichtung konform mit den Weltraumschrott-Richtlinien verhält, das heißt, dass dieser Satellit automatisch und zeitnah wieder in die Atmosphäre eintritt.

Dieser Satellit kann auf zwei unterschiedliche Weisen verwendet werden:

### a) Präventiv

Der Satellit wird gestartet und in eine Umlaufbahn gebracht, in der die Wahrscheinlichkeit der Kollision mit Hochgeschwindigkeitsteilchen (Weltraumschrott) groß ist. Dies ist insbesondere bei sonnensynchronen niedrigen Erdumlaufbahnen der Fall.

### b) Reaktiv

Der Satellit wird erst dann gestartet, wenn sich eine große Fragmentierung in einem Orbit ereignet hat, beispielsweise durch Explosion eines Satelliten oder durch Kollision zwischen zwei Satelliten. Die aus dieser Fragmentierung resultierenden Teilchen werden sich in den ersten Tagen nach der Kollision noch in den zwei Knotenpunkten der Orbits der kollidierten Satelliten konzentrieren. Der eine dieser Knotenpunkte ist der Ort, an dem die Kollision oder Explosion stattgefunden hat, der andere liegt auf der davon bezüglich der Erde gegenübergelegenen Seite. Der erfindungsgemäße Satellit zum Einfangen von Hochgeschwindigkeitsteilchen ist daher bei dieser reaktiven Strategie auf eine Umlaufbahn zu bringen, die eine möglichst große Aufenthaltswahrscheinlichkeit in der Nähe eines Knotenpunktes besitzt. Hierbei bieten sich beispielsweise exzentrische Orbits, vergleichbar mit Molnya-Orbits, an.

Mit der erfindungsgemäßen Vorrichtung, insbesondere wenn sie selbst als eigenständiger Satellit ausgebildet ist, ist ein effizientes Einsammeln oder Zerstören und Abbremsen von kritischen Weltraumschrott-Teilchen durch ein hohes Verhältnis von Oberfläche zu Masse möglich. Des Weiteren ist der in den Figuren gezeigte und im Beispiel beschriebene Satellit einfach und kostengünstig aufgebaut. Das hohe Verhältnis von Oberfläche zu Masse sorgt zudem für einen automatischen Wiedereintritt des Satelliten in die Erdatmosphäre.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere wie die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Wickelkernkörper
- 2: Wickelkernkörper
- 3: vordere Fängerfläche
- 4: hintere Fängerfläche
- 6: Hochgeschwindigkeitsteilchen
- 10: Zentralkörper
- 12: Endscheibe
- 14: Endscheibe
- 16: Trägerplatte
- 17: Solarzellen
- 18: Trägerplatte
- 19: Solarzellen
- 20: Zentralkörper
- 22: Endscheibe
- 24: Endscheibe
- 26: Trägerplatte
- 27: Solarzellen
- 28: Trägerplatte
- 29: Solarzellen
- 30: Spannseil
- 32: Spannseil
- 40: Spannseil
- 42: Spannseil
- 50: Steuerdüsen
- 52: Steuerdüsen
- 54: Steuerdüsen
- 56: Steuerdüsen
- 60: Fragmente
- 62: Fragmentkegel

- X1: Rotationsachse
- X2: Rotationsachse

## Patentansprüche

1. Vorrichtung zum Einfangen von Hochgeschwindigkeitsteilchen, insbesondere von Weltraumschrott, mit
- einer ersten, vorderen Fängerfläche (3) und
- zumindest einer weiteren, hinteren Fängerfläche (4),
- wobei die Fängerflächen (3, 4) im Wesentlichen parallel zueinander angeordnet und in Normalenrichtung voneinander beabstandet sind.

2. Vorrichtung nach Anspruch 1,
**dadurch gekennzeichnet,**
**dass** die vordere Fängerfläche (3) ein Material aufweist, das eine höhere innere Schallgeschwindigkeit, als das Material der hinteren Fängerfläche (4) besitzt.

3. Vorrichtung nach Anspruch 2,
**dadurch gekennzeichnet,**
**dass** das Material der vorderen Fängerfläche (3) keramisch verstärkte Fasern aufweist.

4. Vorrichtung nach einem der vorhergehenden Ansprüche,
**dadurch gekennzeichnet,**
**dass** die hintere Fängerfläche (4) ein Material aufweist, dessen Elastizität größer ist, als die des Materials der vorderen Fängerfläche (3).

5. Vorrichtung nach Anspruch 4,
**dadurch gekennzeichnet,**
**dass** das Material der hinteren Fängerfläche (4) Aramid-Fasern enthält.

6. Vorrichtung nach einem der vorhergehenden Ansprüche,
**dadurch gekennzeichnet,**
**dass** die Dicke der hinteren Fängerfläche (4) größer ist, als die Dicke der vorderen Fängerfläche (3).

7. Vorrichtung nach einem der vorhergehenden Ansprüche,
**dadurch gekennzeichnet,**
**dass** die Fängerflächen (3, 4) von unstarren Körpern gebildet sind, die jeweils an zwei voneinander abgewandten Stirnseiten an jeweils einer Stützstruktur (1, 2) gehaltert sind.

8. Vorrichtung nach Anspruch 7,
**dadurch gekennzeichnet,**
**dass** die Stützstruktur (1, 2) jeweils von einem Wickelkernkörper gebildet ist, wobei zumindest einer der Wickelkernkörper um eine parallel zu den Aufspannebenen der Fängerflächen (3, 4) verlaufende Achse (X1, X2) drehbar ist, um die Fängerflächen (3, 4) auf diesen Wickelkernkörper auf-oder von diesem abzuwickeln.

9. Vorrichtung nach Anspruch 8,
**dadurch gekennzeichnet,**
**dass** beide Wickelkernkörper um jeweils eine parallel zu den Aufspannebenen der Fängerflächen (3, 4) verlaufende Achse (X1, X2) drehbar sind, um die Fängerflächen (3, 4) auf beide Wickelkernkörper auf-oder von diesen abzuwickeln, wobei die Achsen (X1, X2) der beiden Wickelkernkörper vorzugsweise parallel zueinander verlaufen.

10. Satellit mit zumindest einer Vorrichtung zum Einfangen von Hochgeschwindigkeitsteilchen gemäß einem der vorhergehenden Ansprüche.

11. Satellit nach Anspruch 10,
**dadurch gekennzeichnet,**
**dass** die Navigationseinrichtung, die Kommunikationseinrichtung und der Steuerungscomputer des Satelliten in der Stützstruktur (1, 2) vorgesehen sind und dass die Stützstruktur (1, 2) mit Steuerungseinrichtungen zur Lageregelung des Satelliten versehen ist.

12. Satellit nach Anspruch 10,
**dadurch gekennzeichnet,**
**dass** die Stützstruktur (1, 2) mit Solarzellen (17, 19) zur Energieversorgung versehen ist, die im abgewickelten Zustand der Fängerflächen (3, 4) der Sonnenstrahlung ausgesetzt sind.

13. Satellit nach einem der Ansprüche 10 bis 12, mit zumindest einer von einem Wickelkernkörper gebildeten Stützstruktur (1, 2),
**dadurch gekennzeichnet,**
**dass** der Wickelkernkörper mit zumindest einer Antriebsvorrichtung versehen ist, die ausgestaltet ist, um den Wickelkernkörper um seine Längsachse (X1, X2) drehen zu können.

14. Satellit nach Anspruch 13,
**dadurch gekennzeichnet,**
**dass** die Antriebsvorrichtung von zumindest einem Magnetorquer und/oder zumindest einer Rückstoßdüse (50, 52, 54, 56) gebildet ist.

15. Verfahren zum Einfangen von Hochgeschwindigkeitsteilchen, insbesondere von Weltraumschrott, mit einem Satelliten nach einem der Ansprüche 10 bis 14,
**dadurch gekennzeichnet,**
**dass** sich der Satellit entlang einer Flugbahn auf einem vorzugsweise mit den Teilchen gemeinsamen Orbit, vorzugsweise in einer der Bewegungsrichtung der Teilchen entgegengesetzten Richtung, bewegt, wobei der Satellit so ausgerichtet ist, dass die Flugbahn in einer zur vorderen Fängerfläche (3) normalen Richtung verläuft.
